# EUROPÄISCHE PATENTANMELDUNG

(11) **EP 1 083 208 A2**
(43) Veröffentlichungstag der Anmeldung: **14.03.2001**
(21) Anmeldenummer: 99118573.7
(22) Anmeldetag: 20.09.1999
(51) Int. Cl.: C09D 163/00, C09D 5/08

(54) **Korrosionsschutzbeschichtung für Metallmasten sowie Verfahren zum Sanieren von Metallmasten**

(30) Priorität: 19.09.1998 DE 19843070
(71) Anmelder: Thom, Roland, 71522 Backnang (DE)
(72) Erfinder: Thom, Roland, 71522 Backnang (DE)
(74) Vertreter: Ostertag, Ulrich

(57) **Zusammenfassung**

Eine Korrosionsschutzbeschichtung für Metallmasten (1) umfaßt ein zwei-Komponenten-Material auf Epoxidharzbasis mit integrierten Glasblättchen. Ein Metallmast (1) wird dabei wie folgt saniert: Zunächst wird ein Teilabschnitt (9) eines im Boden befindlichen Mastabschnitts (4) freigelegt. Anschließend wird der freigelegte Teilabschnit (9) sowie ein an diesen angrenzender Teilabschnitt (10) eines über dem Boden liegenden Mastabschnitts (3) entrostet. Die entrosteten Teilabschnitte (9, 10) werden dann mit der Korrosionsschutzbeschichtung beschichtet, die anschließend getrocknet wird. Schließlich wird die beim Freilegen ausgehobene Grube wieder aufgefüllt. Die bei dem Verfahren verwendete Korrosionsschutzbeschichtung läßt sich leicht auftragen und bietet einen dauerhaften Korrosionsschutz.

## Beschreibung

Die Erfindung betrifft eine Korrosionsschutzbeschichtung für Metallmasten sowie ein Verfahren zum Sanieren von Metallmasten.

Weiterhin betrifft die Erfindung ein Verfahren zum Sanieren von Metallmasten mit den folgenden Verfahrensschritten:
a) Freilegen eines Teilabschnitts eines im Boden befindlichen Mastabschnitts;
b) Entrosten des freigelegten Teilabschnitts des Mastabschnitts und eines an diesen Teilabschnitt angrenzenden Teilabschnitts eines über dem Boden liegenden Mastabschnitts;
c) Beschichten der entrosteten Teilabschnitte mit einer Korrosionsschutzbeschichtung;
d) Trocknen der Korrosionsschutzbeschichtung;
e) Wiederauffüllen der beim Freilegen ausgehobenen Grube.

Metallmasten, z.B. Stahlrohrmasten, werden unter anderem als Lichtmasten in großer Stückzahl verwendet. Dabei sind sie Umgebungseinflüssen ausgesetzt, die die Metallkorrosion, insbesondere am sogenannten Mastfuß, d.h. dem dem Bodenniveau benachbarten, teilweise im und teilweise außerhalb des Bodens befindlichen Mastabschnitt, beschleunigen. Werden nicht entsprechende Vorkehrungen getroffen, wird die Lebensdauer eines derartigen Metallmastes durch die Korrosion verkürzt und es ist schon früh ein teurer Austausch erforderlich.

Eine bekannte vorbeugende Korrosionsschutzbeschichtung für Stahlmasten ist das Feuerverzinken, beschrieben in der Zeitschrift EVU Betriebspraxis, Jahrgang 34 (1995), Heft 9, Seiten 304 bis 305. Hierbei wird die vorbereitete Oberfläche des Stahlmastes in schmelzflüssigen Zink getaucht und somit mit Zink überzogen.

Die Korrosion des nach erfolgtem Feuerverzinken die Oberflächenschicht des Mastes bildenden Zinks ist abhängig von der Feuchtigkeit und dem Chemikaliengehalt in der Umgebung des Mastes. Darüber hinaus ist die Herstellung einer Korrosionsschutzbeschichtung mittels Feuerverzinkens aufwendig und teuer und nur für noch nicht installierte Metallmasten praktikabel.

Ein Sanierungsverfahren der eingangs genannten Art kommt beim nachträglichen Anbringen einer Korrosionsschutzbeschichtung auf bereits installierten Metallmasten zum Einsatz und ist in der Zeitschrift EVU Betriebspraxis, Jahrgang 34 (1995), Heft 9, Seiten 304 bis 305, beschrieben. Eine konkrete Zusammensetzung für die Korrosionsschutzbeschichtung ist dort nicht angegeben. Ein Problem bei diesem Verfahren ist es, eine geeignete Korrosionsschutzbeschichtung zu finden, die sich einerseits leicht verarbeiten läßt und andererseits einen dauerhaften Korrosionsschutz bietet.

Es ist daher die Aufgabe vorliegender Erfindung, eine Korrosionsschutzbeschichtung für Metallmasten derart weiterzubilden, daß sie eine möglichst lange Korrosionsschutzdauer bietet und sich dabei einfach auf der Oberfläche der Metallmasten aufbringen läßt.

Diese Aufgabe wird erfindungsgemäß dadurch gelöst, daß die Korrosionsschutzbeschichtung für Metallmasten ein Zwei-Komponenten-Material auf Epoxidharzbasis mit integrierten Glasplättchen umfaßt.

Das Zwei-Komponenten-Material läßt sich als streichfähige Flüssigkeit wählbarer Viskosität mischen. Somit ist ein einfaches Auftragen der Korrosionsschutzbeschichtung, z.B. mittels eines Pinsels, möglich.

Die integrierten Glasplättchen bilden eine gegen korrosive äußere Einflüsse äußerst resistente und praktisch nicht alternde Schicht. Somit ist ein langfristiger Korrosionsschutz des behandelten Mastes oder der behandelten Mastabschnitte auch unter Umgebungseinflüssen wie Salz, z.B. Streusalz, Schwefeldioxid und Säuren gewährleistet.

Aufgabe der vorliegenden Erfindung ist es weiter, ein Verfahren der eingangs genannten Art derart weiterzubilden, daß ein dauerhafter Korrosionsschutz einfach aufzutragen ist.

Diese Aufgabe wird erfindungsgemäß dadurch gelöst, daß eine Korrosionsschutzbeschichtung nach Anspruch 1 verwendet wird.

In Verbindung mit dem oben dargestellten Verfahren kommen die Vorteile der erfindungsgemäßen Korrosionsschutzbeschichtung zum Tragen. Die einfache Auftragbarkeit ermöglicht es, die Korrosionsschutzbeschichtung vor Ort vorzunehmen, ohne den Metallmasten dabei demontieren zu müssen.

Gleichzeitig werden nur die Abschnitte des Metallmasts bearbeitet, die erfahrungsgemäß den korrosivsten externen Einflüssen ausgesetzt sind.

Bei einer Weiterbildung des Verfahrens erfolgt das Beschichten und Trocknen der Korrosionsschutzbeschichtung in mehreren aufeinanderfolgenden Schritten. Auf diese Weise kann eine ggf. gewünschte höhere Schichtdicke einfach erzielt werden, ohne daß dabei ein zu zähflüssiges Ausgangsmaterial gewählt werden muß. Zusätzlich kann auf diese Weise eine Verbundstruktur der Korrosionsschutzbeschichtung, bestehend aus Schichten unterschiedlicher Zusammensetzung erzielt werden, die sich beispielsweise im Gehalt oder der Art der integrierten Glasplättchen oder der Zusammensetzung der Epoxidharzbasis unterscheiden.

Eine vorteilhafte Ausführungsform des Verfahrens umfaßt den Verfahrensschritt des Prüfens der Wandstärke des Mastabschnitts. Dadurch ist die Bestimmung möglich, ob sich die Wandstärke des Metallmastes durch Korrosion bereits geändert hat. Mit Hilfe dieser Daten sind Rückschlüsse über die Wirksamkeit der bisherigen Korrosionsschutzbeschichtung und Schlußfolgerungen in Richtung einer optimierten Zusammensetzung der Korrosionsschutzbeschichtung zum Schutz gegen die individuell vorherrschenden Umgebungseinflüsse möglich.

Bei einer Weiterbildung des Verfahrens erfolgt das Prüfen mittels Ultraschallwellen. Mit Hilfe dieses Prüfverfahrens sind verläßliche und genaue Daten zur Wandstärke des Metallmastes erhebbar.

Bei einer Ausgestaltung des Verfahrens erfolgt das Entrosten der Teilabschnitte durch Sandstrahlen. Ein derartiges Entrostungsverfahren ist nicht umweltbelastend, relativ einfach durchzuführen und gewährleistet ein rasches Entrosten.

Das Entrosten kann vorzugsweise durch Sandstrahlen mit Hochofenschlacke erfolgen. Dieses Material hat zum Sandstrahlen günstige Eigenschaften und ist zudem als wiederverwertetes Abfallmaterial sehr preiswert.

Zweckmäßigerweise erfolgt zumindest das Aufbringen der ersten Schicht der Korrosionsschutzbeschichtung auf die zu bearbeitenden Teilabschnitte von unten nach oben. Auf diese Weise wird eine gleichförmige Korrosionsschutzbeschichtung erzielt und verhindert, daß sich im Zuge des Pinselauftrags Nasen aus herablaufendem Zwei-Komponenten-Material (sogenannte Trüler) bilden, die über die noch unbehandelte Oberfläche des Metallmastes laufen, dort inhomogen antrocknen und damit den weiteren Schichtauftrag erschweren.

Ein Ausführungsbeispiel der Erfindung wird nachfolgend anhand der Zeichnung näher erläutert; es zeigen:

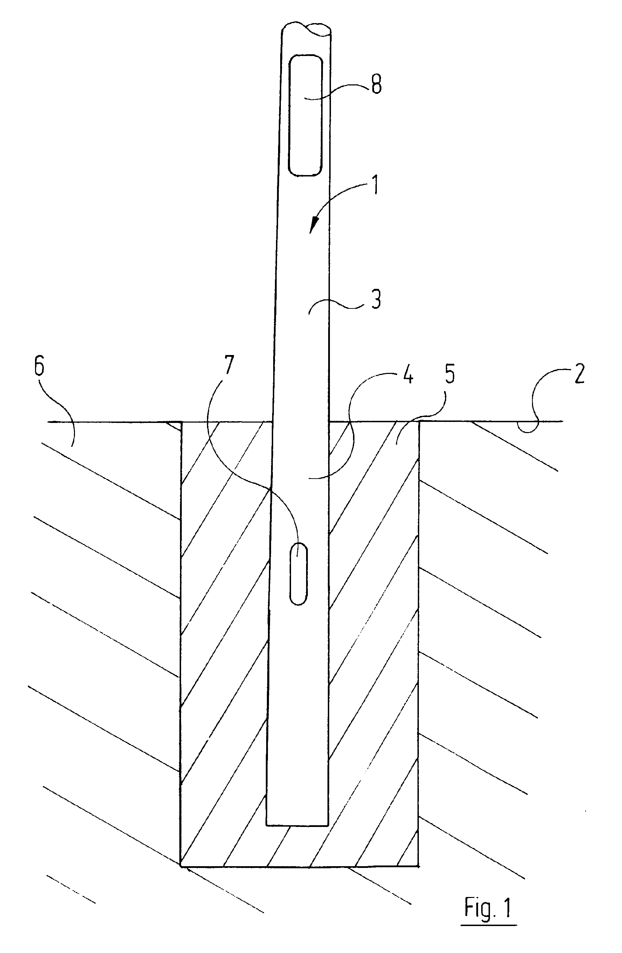

- Figur 1: einen einfundamentierten Metallmasten, wobei die den Metallmasten umgebenden Bodenbereiche geschnitten dargestellt sind;
- Figur 2: den Metallmasten von Fig. 1, nachdem ein Fußbereich freigelegt wurde.

Der in der Zeichnung mit dem Bezugszeichen 1 versehene Metallmast weist einen oberhalb der Bodenoberfläche 2 liegenden ersten Mastabschnitt 3 und einen darunter liegenden zweiten Mastabschnitt 4 auf. Der Mastabschnit 4 steckt in einem Fundament 5. Das Fundament 5 besteht aus verdichtetem Kies und umgibt den Mastabschnitt 4 becherförmig. Alternativ kann das Fundament 5 auch aus verdichtetem Sand, Splitt, Erde oder vollständig aus Beton bestehen; es kann darüber hinaus auch mehrteilig aufgebaut sein. Bei einer solchen mehrteiligen Ausführung umgibt einen Bereich des Mastabschnitts 4 nahe der Bodenoberfläche 2 ein ringförmiger Betonkranz und der restliche Mastabschnitt 4 steht in einem Hohlzylinder oder Becher aus verdichtetem Material, welches wiederum mehrere Schichten verschiedener Bestandteile aufweisen kann. Das Fundament 5 ist von Erdboden 6 umgeben.

Der Metallmast 1 umfaßt eine im Mastabschnitt 4 liegende Kabeleinführung 7. Durch diese Kabeleinführung 7, die mittels einer Tür verschlossen werden kann, können elektrische Kabel in den Innenraum des hohlen Metallmastes 1 eingeführt werden. Weiterhin weist der Metallmast 1 eine im Mastabschnitt 3 liegende Tür 8 auf, durch die das Innere des Metallmastes 1 zu Installationsund Wartungszwecken zugänglich ist.

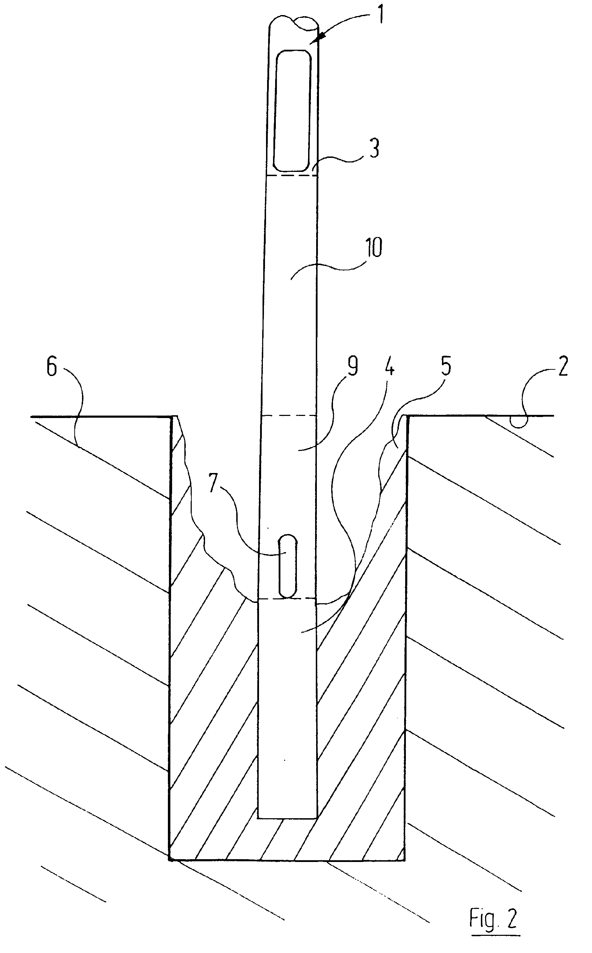

In Figur 2 ist ein oberer Bereich des Fundaments 5 ausgegraben, so daß ein oberer Teilabschnitt 9 des unteren Mastabschnitts 4 freigelegt ist. Der obere Teilabschnitt 9 reicht von der Unterkante der Kabeleinführung 7 bis zu dem durch die Bodenoberfläche 2 vorgegebenen Niveau. Im Mastabschnitt 3 ist durch gestrichelte Linien ein Teilabschnitt 10 des oberen Mastabschnitts 3 angedeutet, der an den ersten Teilabschnitt 9 angrenzt und sich von diesem nach oben bis in den Bereich der Tür 8 erstreckt.

Zum Sanieren der Teilabschnitte 9 und 10 des Metallmasts 1 verfährt man folgendermaßen:

Zunächst wird die Wandstärke des Metallmasts 1 geprüft. Dies erfolgt z.B. mit Hilfe eines Ultraschallgeräts von innen.

Anschließend wird der erste Teilabschnitt 9 des Metallmastes 1 in der in Fig. 2 dargestellten Weise freigelegt. Bei dem Fundament 5 aus verdichtetem Kies der Zeichnung erfolgt dies durch Ausgraben; härtere Materialien, wie Beton, werden aufgebrochen. Nach dem Freilegen des Teilabschnitts 9 erfolgt eine Sichtprüfung der Außenwandungen der Teilabschnitte 9 und 10, unterstützt durch eine Hammerprobe und gegebenenfalls eine weitere Ultraschallmessung von außen.

Die zu entrostenden Teilabschnitte 9 und 10 des Metallmastes 1 werden mit starkem Schablonenpapier gegen die angrenzenden Bereiche der Mastabschnitte 3 und 4 abgegrenzt. Dadurch wird eine saubere Bearbeitungskante zwischen den behanund den unbehandelten Mastabschnitten geschaffen.

Anschließend erfolgt die Reinigung und Entrostung der Teilabschnitte 9 und 10 durch Sandstrahlen mit Hochofenschlacke, gegebenenfalls auch durch manuelles oder maschinelles Abschleifen.

Nun wird als erste Schicht der Korrosionsschutzbeschichtung eine Grundierung auf die Teilabschnitte 9 und 10 aufgetragen. Die Korrosionsschutzbeschichtung ist dabei ein Zwei-Komponenten-Material auf Epoxidharzbasis mit Glasplättchen. Sowohl der Härter, als auch das Grundmaterial des Zwei-Komponenten-Materials sind flüssig. Nach dem Vermischen der zwei Komponenten wird die aufzutragende Korrosionsschutzbeschichtung zähflüssig.

In einem ersten Anstrich wird die Grundierung durch Pinselstriche von unten nach oben mit einer stärkeren Schichtdicke aufgetragen. Durch diese Vorzugsrichtung des Auftrags wird verhindert, daß beim Anstreichen entstehende Trüler auf die noch nicht bestrichene Außenwand der Teilabschnitte 9 bzw. 10 verlaufen. Die erste, mit der Außenwand in Kontakt tretende Schicht der Korrosionsschutzbeschichtung, wird dadurch homogen und neigt nicht zur Rißbildung.

Gegebenenfalls wird die Grundierung durch Vermischen mit einer Verdünnung weniger zähflüssig gemacht.

Nach dem Auftrag der Grundierung wird je nach Umgebungsbedingungen eine angemessene Trocknungszeit abgewartet. Gegebenenfalls können auch aktive Trocknungsmaßnahmen (Druck- oder Heißluft) durchgeführt werden.

Nach dem Trocknen der ersten Schicht wird eine zweite Schicht der Korrosionsschutzbeschichtung aufgebracht. Diesmal wird das Zwei-Komponenten-Material nicht verdünnt und der Anstrich erfolgt so, daß eine geringere Schichtdicke erzielt wird als bei der Grundierung.

Das Aufbringen der Korrosionsschutzbeschichtung erfolgt mittels eines Pinsels oder einer Walze. Gegebenenfalls kommt auch ein Spritzverfahren oder ein elektrostatisches Verfahren zum Auftrag der Korrosionsschutzbeschichtung zum Einsatz.

Zum Trocknen der fertigen Korrosionsschutzbeschichtung, die aus zwei oder auch mehr nach dem oben beschriebenen Verfahren auftragenen Einzelschichten bestehen kann, wird wieder eine angemessene Zeit abgewartet.

Anschließend wird das Fundament 5 wieder bis zum durch die Bodenoberfläche 2 vorgegebenen Niveau aufgefüllt und verfestigt.

## Patentansprüche

1. Korrosionsschutzbeschichtung für Metallmasten
dadurch gekennzeichnet, daß
sie ein Zwei-Komponenten-Material auf Epoxidharzbasis mit integrierten Glasplättchen umfaßt.

2. Verfahren zum Sanieren von Metallmasten mit den folgenden Verfahrensschritten:
a) Freilegen eines Teilabschnitts (9) eines im Boden befindlichen Mastabschnitts (4);
b) Entrosten des freigelegten Teilabschnitts (9) des Mastabschnitts (4) und eines an diesen Teilabschnitt (9) angrenzenden Teilabschnitts (10) eines über dem Boden liegenden Mastabschnitts (3);
c) Beschichten der entrosteten Teilabschnitte (9, 10) mit einer Korrosionsschutzbeschichtung;
d) Trocknen der Korrosionsschutzbeschichtung;
e) Wiederauffüllen der beim Freilegen ausgehobenen Grube;
dadurch gekennzeichnet,
daß eine Korrosionsschutzbeschichtung nach Anspruch 1 verwendet wird.

3. Verfahren nach Anspruch 2, dadurch gekennzeichnet,
daß das Beschichten und Trocknen der Korrosionsschutzbeschichtung in mehreren aufeinanderfolgenden Schritten erfolgt.

4. Verfahren nach Anspruch 2 oder 3, dadurch gekennzeichnet,
daß es den Verfahrensschritt des Prüfens der Wandstärke der Mastabschnitte (3, 4) umfaßt.

5. Verfahren nach Anspruch 4, dadurch gekennzeichnet,
daß das Prüfen mittels Ultraschallwellen erfolgt.

6. Verfahren nach einem der Ansprüche 2 bis 5, dadurch
gekennzeichnet, daß das Entrosten der Teilabschnitte (9, 10) durch Sandstrahlen erfolgt.

7. Verfahren nach Anspruch 6, dadurch gekennzeichnet,
daß das Entrosten durch Sandstrahlen mit Hochofenschlacke erfolgt.

8. Verfahren nach einem der Ansprüche 2 bis 7, dadurch
gekennzeichnet, daß zumindest das Aufbringen der ersten Schicht der Korrosionsschutzbeschichtung auf die Teilabschnitte (9, 10) von unten nach oben erfolgt.
